**Europäisches Patentamt**

**European Patent Office**

**Office européen des brevets**

(19)

(11) Publication number: **0 153 978**

**B1**

(12)

# EUROPEAN PATENT SPECIFICATION

(45) Date of publication of patent specification: **07.12.88**

(51) Int. Cl.⁴: **E 05 B 65/19**

(21) Application number: **84105603.9**

(22) Date of filing: **17.05.84**

(54) **Device for preventing the unlocking of a vehicle's motor compartment hood.**

(30) Priority: **08.03.84 IT 8360984**

(43) Date of publication of application:
**11.09.85 Bulletin 85/37**

(45) Publication of the grant of the patent:
**07.12.88 Bulletin 88/49**

(84) Designated Contracting States:
**AT BE CH DE GB IT LI LU NL SE**

(56) References cited:
**US-A-3 831 409**
**US-A-4 099 593**

(73) Proprietor: **DELTA ELETTRONICA s.p.a.**
**Via Astico 41**
**I-21100 Varese (VA) (IT)**

(72) Inventor: **Memmola, Serafino**
**Via Cimabue, 62**
**I-21100 Varese (VA) (IT)**

EP 0 153 978 B1

Courier Press, Leamington Spa, England.

## Description

Device for preventing the unlocking of a vehicle's motor compartment hood.

The device for preventing the unlocking of a vehicle's motor compartment hood in accordance with this invention refers to the locking means, which are accomplished with a Bowden cable, i.e. a flexible cable sliding inside a sheath the ends of which are fixed.

There is hitherto a very large number of devices intended to protect from theft the vehicles and said devices generally consist in the use of mechanical and/or electrical devices suited for locking the locks access of the vehicle and/or for disconnecting the electrical circuits of the vehicle engine and/or for actuating alarm sirens. See for example US—A—4,099,593, on which the preamble of claim 1 is based.

The most part of devices used in these processes are installed in the engine housing or in the boot and therefore the access to said devices for their eventual interdiction is only hindered by the locking devices of the relevant bonnets which generally consist of common locks or of inside hooking devices which can be eliminated by a control manually operated from the interior by the driver by means of a handle which is connected with the Bowden cable. Similarly controlled through Bowden cable are parts of the engine essential for its operation such as e.g. the carburettor and respectively the injector pump in the engines and in Diesel engines through the accelerator pedal.

The possibility of protecting the locking devices of said hood by acting on the control cable of the hooking devices of said accesses has been taken in account by the US—A—4,099,593, which teaches a lock mechansim of the latch release Bowden cable of the hood of the motor compartment of a vehicle, in which said Bowden cable includes a bare wire portion with a clamp fastened to it, and comprising said mechanism a locking element pivotably connected to the rigid structure of the mechanism, to which are fixedly connected the free ends of the sheath of the release Bowden cable in correspondence of the bare wire portion, being said locking element suited to collaborate with said clamp in order to prevent its movement and actuated by a separate hand-operated system comprising a lock Bowden cable drivable from the interior of the vehicle and a safe compartment in the interior of the vehicle in which is placed the control of said lock cable, so that if a thief were to gain access to the vehicle interior the hood latch release cable could not be actuated without first actuating the lock mechanism cable that is without first breaking into the safe compartment.

The aim of this invention is to avoid a separate hand-operated system of the locking mechanism of the Bowden cable which controls the opening of the motor compartment hood and to achieve so also the possibility to actuate said mechanism automatically with a known anti-theft system.

The device for preventing the unlocking of a vehicle's motor compartment hood in conformity with this invention, comprises:

—a Bowden cable with a sheath and a cable;

—a rigid structure provided with means for receiving the free ends of the sheath after removing a part thereof, and provided with a locking element, turnably or slidably connected to the structure and having such a shape to allow it to be positioned astride the cable and

—a clamp rigidly fastened to the cable, such that after positioning the locking element astride the cable the movement of the clamp is prevented in at least one longitudinal direction, the locking element being drivable by an electric motor, which can be independently actuated by actuating means or which can be actuated with an already known anti-theft system.

In a preferred solution of the device the clamp is suited to achieve restoring of the mechanical continuity of the cable, when the latter has been cut for facilitating the mounting of the rigid structure.

In another preferred solution the holes of the rigid structure for the passage of the cable and the sleeves of the structure, that is the means for receiving the free ends of the sheath are provided with a longitudinal slit, which is open at its ends and suited to allow the insertion of the structure astride the cable, when the latter is already installed, without removing it.

In a further solution one of the sleeves and the adjoining hole are obtained from an element, which is connected to the structure by means of screwing or anyhow by other means known to the prior art, suited to adjust the longitudinal position of the sleeve in respect of the structure and therefore to facilitate, when inserting said structure astride the cable, the butt connection of the two ends of the sheath with the sleeves and to adjust at the same time the position of the sheath in order to eliminate eventual slacks of the control accomplished with the cable.

In a further solution the inserting member of the locking element consists only of an extension of the element suited to facilitate manually actuating of said element.

In another solution the rigid structure is provided with elements suited to fixe it to the structure of the vehicle so that the device can also be employed for locking the flexible cable without sheath, which connects the control lever rigidly connected to the member which it controls, to the counterspring keeping said lever in the end run position of locked hood, so as to achieve locking of said lever through the locking of said cable and so to prevent the control of said member.

In order to allow better understanding of the device according to the present invention, two embodiments will be described, as example only, with reference to the enclosed schematic drawings, wherein:

—the figures 1, 2 and 5 are side views,

—figure 3 is a front view,

—figure 4 is a cross-section.

The process of the first example refers to inseting of the lock control accomplished with a Bowden cable, of the safety locking hook of the bonnet of the engine housing of a motorcar.

Said hook 1 cooperates in hooked condition with an element 2 which is rigidly connected with said bonnet, and is rigidly connected in turn with the lever 3 which is hinged in a point 4 of the fixed structure of the motorcar, and which is kept in closed position by the spring 5 hooked to a point 6 of the fixed structure. The lever 3 is connected and actuated by the cable 7 which is controlled by the handle 8 through the lever 9 which is rigidly connected to it and hinged in a fixed point 10 under the dashboard, said handle 8 is held in position of closed bonnet by the spring 11 connected in point 12 to the fixed structure of the motorcar. By rotating the handle 8, the lever 3 is displaced through cable 7, and so the hook 1 releases from element 2 which is rigidly connected with the bonnet of the engine housing which can thus be opened. Of course the terminal sleeves 13 and 14 of the sheathing 15 are connected to fixed points in respect of the hinges 4 and 10 and therefore to the structure of the motorcar.

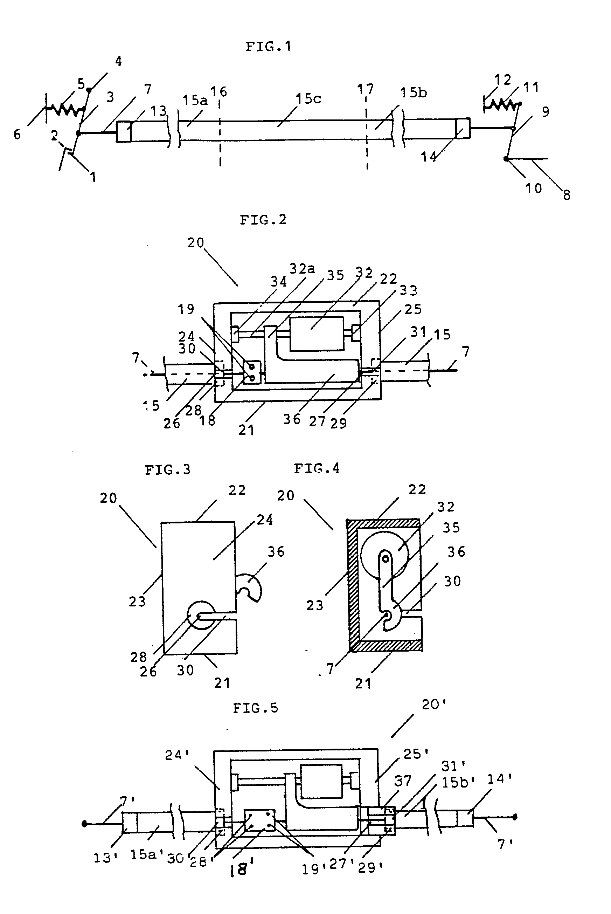

The process contemplates cutting of the sheathing according to the sections 16 and 17 and the taking away of the segment 15c of said sheathing, after disconnection of one end of the cable and partial removal of it in order to facilitate said cutting and taking away of the sheathing without any damage for the cable, re-inserting of the cable and restoring the connection of its end, subsequently application to the cable 7 in the bare portion near the edge 16 of the sheathing of clamp 18 and its rigidly fastening with the cable by means of the screws 19. The rigid structure 20 is then inserted on the cable in the bare part. Said structure 20 has the shape of a box practically parallelepiped with one wall missing, hence provided with wall 21 and with opposed wall 22, with the longitudinal wall 23 and with the cross walls 24 and 25, and missing of the wall opposed to the longitudunal one 23. On the cross walls 24, 25 the through holes 26, 27 are obtained, having a diameter slightly larger than the diameter of the cable 7, and in addition two cylindrical slots 28, 29 turned outwards and so sized as to allow accommodation of the cut ends 16 and 17 of the sheathing 15 so as to form the terminal sleeves of the two segments 15a and 15b of the sheathing. The walls of the holes 26, 27 and those of the slots 28, 29 are interrupted by the open slits 30, 31, which therefore concern the whole thickness of the walls 24, 25, and the cross size of which is equal to the diameter of the holes 26, 27, as they have to allow inserting of the structure 20 astride of the cable 7 until the latter reaches said holes 26, 27. The structure 20 bears inside the electrical motor 32 (type FC 150—190, 18A of Nuova Sma s.p.a.) by means of the journal bearing 33, 34, which are rigidly connected respectively with the walls 24, 25; the shaft 32a of the motor bears the arm 35 keyed on it, which free end is rigidly connected with the tile-shaped element 36 which is so sized as to allow being inserted astride of cable 7 but not of clamp 18. The arm 35 is so mounted on the shaft 32a as to be kept in the position shown in Fig. 3 during normal use of the motorcar.

When imparting the control of the antitheft alarm system the motor 32 is so actuated as to rotate according to such an angle, which is 45 degrees in this example, to bring the element 36 into contact with the cable 7 enclosing it as shown in Fig. 4 and adhering on one side to the surface 18a of the clamp and on the other to the inner surface of the wall 25 so as to prevent the clamps from moving towards said wall 25 and so to cause locking of the control achieved with the cable 7 and thus excluding the possibility to open the engine bonnet by actuation of the handle 8.

The disconnection of the antitheft system induces inversely the motor 32 to rotate in the opposite direction and so the element 36 to disconnect from the position which locks the cable 7, and the position shown in Fig. 3 to be restored.

The length of the cut zone 15c of the sheathing and the ensuing size of structure 20 are so selected as to allow longitudinal travel of the clamp 18 corresponding to the cable displacment required to control the lever 3 and so to release the hook 1 of the safety lock of the bonnet.

A second example describes, with reference to Fig. 5, the inserting of a control locking by using a rigid structure almost similar to the one of the previous example, but now considering the case that cable 7' cannot be unhooked at the ends and that therefore the removal of the cable is impossible. In this case the cable 7' as well as the sheathing 15' must be cut in an intermediate point of the segment which is to be taken away, then the sheathing is removed and after having cut the segment as required the two sheathing segments are re-installed on the cable and the two cut ends of the cable are reconnected with a clamp 18' with double screws 19' suited to lock said ends together, so as to restore the mechanical continuity of said cable. The rigid structure 20' is then installed astride of the cable thanks to the slits 30' and 31'. In this example the rigid structure 20' provided with the cylinder 37 screwed on its wall 25', the sleeve 31' for butt connection of the sheathing 15b' being obtained on said cylinder which of course is also provided with the slit 31' and the hole 27' for passage of the cable 7'. After assembling of the structure 20' the cylinder 37 allows with its screwing to adjust at the same time the but connection of the sheathing in respect of the structure 20', as well as the length of the sheathing in respect of the terminal fixed sleeves 13' and 14'.

Similar processes of locking insertion can be made for the control from the accelerator to the carburettor, said lock being controlled simultaneously with the one of the bonnet of the engine housing by the control inserting the antitheft alarm system.

**Claims**

1. Device for preventing the unlocking of a vehicle's motor compartment hood, comprising:
—a Bowden cable with a sheath (15a, b, c) and a cable (7);
—a rigid structure (20) provided with means (28, 29) for receiving the free ends (16, 17) of the sheath (15a, 15b) after removing a part (15c) thereof, and provided with a locking element (36), turnably or slidably connected to the structure (20) and having such a shape to allow it to be positioned astride the cable (7) and
—a clamp (18) rigidly fastened to the cable (7), such that after positioning the locking element (36) astride the cable the movement of the clamp is prevented in at least one longitudinal direction, characterized in that the locking element (36) is drivable by an electric motor (32), which can be independently actuated by actuating means or which can be actuated with an already known anti-theft system.

2. Device according to claim 1, characterized in that the clamp (18) is suited to achieve restoring of the mechanical continuity of the cable (7), when the latter has been cut for facilitating the mounting of the structure (20).

3. Device according to claim 1, characterized in that the holes (26, 27) for the passage of the cable (7) and the sleeves (28, 29) of the rigid structure (20) are provided with a longitudinal slit (30, 31), which is open at its ends and suited to allow inserting the structure (20) astride the cable (7), which is already installed, without removing it.

4. Device according to claim 1, characterized in that one of the sleeves (28, 29) and the adjoining hole (26, 27) are obtained from an element (37), which is connected to the rigid structure (20) by means of screwing or anyhow by other means known to the prior art, suited to adjust the longitudinal position of the sleeve in respect of the structure (20) and therefore to facilitate, when inserting said structure astride the cable (7), the butt connection of the two ends (16, 17) of the sheath with the sleeves (28, 29) and to adjust at the same time the position of the sheath in order to eliminate eventual slacks of the control accomplished with the cable.

5. Device according to claim 1, characterized in that the inserting member (35) of the locking element (36) consists only of an extension of the element (36) suited to facilitate manually actuating of said element.

6. Device according to claim 1, characterized in that the rigid structure (20) is provided with elements suited to fix it to the structure of the vehicle so that the device can also be employed for locking the flexible cable without sheath, which connects the control lever (3), rigidly connected to the member (1) which it controls, to the counterspring (5) keeping said lever (3) in the end run position of locked hood, so as to achieve locking of said lever through the locking of said cable and so to prevent the control of said member (1).

**Patentansprüche**

1. Vorrichtung zum Verhindern des Entriegelns der Motorhaube eines Fahrzeugs, mit
—einem Bowdenzug mit einer Hülle (15a, b, c) und einem Drahtseil (7);
—einem starren Bauteil (20) mit Mitteln (28, 29) zum Aufnehmen der freien Enden (16, 17) der Hülle (15a, 15b) nach dem Entfernen eines Teilstückes (15c) derselben, mit einem Blockierelement (36), das drehbar oder schiebbar mit dem Bauteil (20) verbunden und so gestaltet ist, daß es in eine das Drahtseil (7) rittlings umgreifende Position gebracht werden kann und
—einer Klemme (18), die an dem Drahtseil (7) starr befestigt ist derart, daß nach dem einstellen des Blockierelementes (36) rittlings zum Drahtseil die Bewegung der Klemme in wenigstens einer Längsrichtung verhindert ist, dadurch gekennzeichnet, daß das Blockier-element (36) durch einen Elektromotor (32) antreibbar ist, der durch Betätigungsmittel unabhängig betätigt oder mit einem bereits bekannten Anti-Diebstahls-System betätigt werden kann.

2. Vorrichtung nach Anspruch 1, dadurch gekennzeichnet, daß die Klemme (18) zum Wiederherstellen der mechanischen Verbindung des Drahtseils (7) ausgebildet ist, nachdem letzteres, um das Anbringen des Bauteils (20) zu erleichtern, zerschnitten worden ist.

3. Vorrichtung nach Anspruch 1, dadurch gekennzeichnet, daß die Bohrungen (26, 27) für den Durchlaß des Drahtseils (7) und die Buchsen (28, 29) des starren Bauteils (20) mit einem Längsschlitz (30, 31) versehen sind, der an seinen Enden offen ist, um das Einsetzen des Bauteils (20) auf das bereits montierte Drahtseil (7) zu erleichtern, ohne es zu entfernen.

4. Vorrichtung nach Anspruch 1, dadurch gekennzeichnet, daß eine der Buchsen (28, 29) und die benachbarte Bohrung (26, 27) in einem Bauelement (37) vorgesehen sind, das mit dem starren Bauteil (20) durch Schrauben oder andere bekannte Mittel verbunden ist, die geeignet sind, die Lage der Buchse in Längsrichtung relativ zum Bauteil (20) einzustellen und dadurch die Stoßverbindung der zwei Enden (16, 17) der Hülle mit den Buchsen (23, 29) zu erleichtern, wenn das Bauteil auf das Drahtseil (7) aufgesetzt wird, und um gleichzeitig die Position der Hülle zu regulieren, um ein mögliches Spiel der durch das Drahtseil bewirkten Steuerung zu beseitigen.

5. Vorrichtung nach Anspruch 1, dadurch gekennzeichnet, daß das Eingriffsglied (35) des Blockier-elementes (36) nur aus einer Verlängerung des Elementes (36) besteht, um ein manuelles Betätigen des Elementes zu erleichtern.

6. Vorrichtung nach Anspruch 1, dadurch gekennzeichnet, daß das starre Bauteil (20) mit Befestigungselementen versehen ist, um es an der Fahrzeugkarosserie zu befestigen, so daß die Vorrichtung ebenfalls für das Blockieren des flexiblen Drahtseils ohne Hülle verwendet werden kann, das den Steuerhebel (3), der starr mit dem von ihm gesteuerten Teil (1) verbunden ist, mit der Gegenfeder (5), die den Steuerhebel (3) in der Bewegungsendstellung der verriegelten Motorhaube hält, verbindet, um so das Verriegeln des Hebels (5) durch das Blockieren des Drahtseils zu erreichen und so die Steuerung des Teils (1) zu verhindern.

## Revendications

1. Dispositif pour empêcher le déverrouillage du capot d'un logement de moteur de véhicule, comprenant:

—un câble Bowden muni d'une gaine (15a, b, c) et d'un câble (7);

—une structure rigide (20) munie de moyens (28, 29) pour recevoir les extrémités libres (16, 17) de la gaine (15a, 15b) après avoir retiré une partie (15c) de celle-ci, et munie d'un élément de verrouillage (36) relié en rotation ou en glissement à la structure (20) et présentant une forme lui permettant d'être placée à cheval sur le câble (7); et

—une pince de serrage (18) fixée rigidement au câble (7) de façon qu'après la mise en place de l'élément de verrouillage (36) à cheval sur le câble, le mouvement de la pince de serrage soit empché dans au moins une direction longitudinale; dispositif caractérisé en ce que l'élément de verrouillage (36) peut être commandé par un moteur électrique (32) pouvant être actionné indépendamment par des moyens de manoeuvre, ou pouvant être actionné par un système d'antivol déjà connu.

2. Dispositif selon la revendication 1, caractérisé en ce que la pince de serrage (18) est conçue pour rétablir la continuité mécanique du câble (7) lorsque ce dernier a été coupé pour faciliter le montage de la structure (20).

3. Dispositif selon la revendication 1, caractérisé en ce que les trous (26, 27) destinés au passage du câble (7) et les manchons (28, 29) de la structure rigide (20), sont munis d'une fente longitudinale (30, 31) ouverte à ses extrémités et conçue pour permettre l'introduction de la structure (20) à cheval sur le câble (7) déjà monté, sans retirer celui-ci.

4. Dispositif selon la revendication 1, caractérisé en ce que l'un des manchons (28, 29) et le trou adjacent (26, 37) sont obtenus à partir d'un élément (37) relié à la structure rigide (20) par vissage ou par tout autre moyen connu de l'art antérieur permettant de régler la position longitudinale du manchon par rapport à la structure (20) et par conséquent de faciliter, lorsqu'on introduit la structure à cheval sur le câble (7), la liaison de butée des deux extrémités (16, 17) de la gaine avec les manchons (28, 29), et de régler en même temps la position de la gaine pour supprimer des relâchements éventuels de la commande effectuée par le câble.

5. Dispositif selon la revendication 1, caractérisé en ce que l'élément d'introduction (35) de l'élément de verrouillage (39) est constitué simplement par un prolongement de cet élément (36) conçu pour faciliter la manoeuvre manuelle de cet élément.

6. Dispositif selon la revendication 1, caractérisé en ce que la structure rigide (20) est munie d'éléments permettant de la fixer à la structure du véhicule de façon que le dispositif puisse également être utilisé pour verrouiller le câble flexible sans gaine, qui relie le levier de commande (3), relié rigidement à l'élément (1) qu'il commande, au ressort antagoniste (5) maintenant le levier (3) dans la position de fin de course du capot verrouillé, de manière à effectuer le verrouillage de ce levier par le verrouillage du câble, et de manière à empêcher ainsi la commande de cet élément (1).

FIG.1

FIG.2

FIG.3 FIG.4

FIG.5